Europäisches Patentamt

European Patent Office

Office européen des brevets

(19)

(11) Veröffentlichungsnummer: **0 104 564**
**B1**

## (12) EUROPÄISCHE PATENTSCHRIFT

(45) Veröffentlichungstag der Patentschrift:
**08.01.86**

(51) Int. Cl.⁴: **A 23 K 1/18**

(21) Anmeldenummer: **83109219.2**

(22) Anmeldetag: **17.09.83**

(54) **Futterfolie und Verfahren zu ihrer Herstellung.**

(30) Priorität: **28.09.82 DE 3235765**

(43) Veröffentlichungstag der Anmeldung:
**04.04.84 Patentblatt 84/14**

(45) Bekanntmachung des Hinweises auf die Patenterteilung:
**08.01.86 Patentblatt 86/2**

(84) Benannte Vertragsstaaten:
**AT BE CH DE FR GB IT LI LU NL SE**

(56) Entgegenhaltungen:
**CH - A - 548 163**
**DE - A - 2 633 659**
**DE - A - 2 824 042**

**Die Akte enthält technische Angaben, die nach dem Eingang der Anmeldung eingereicht wurden und die nicht in dieser Patentschrift enthalten sind.**

(73) Patentinhaber: **Tetra Werke Dr.rer.nat. Ulrich Baensch GmbH, Herrenteich 78, D-4520 Melle 1 (DE)**

(72) Erfinder: **von Poeppinghausen, Klaus-Jürgen, Dipl.-Landw., Bakumer Strasse 57, D-4520 Melle 1 (DE)**

(74) Vertreter: **Mansmann, Ivo, c/o Gödecke AG - Patentabteilung Postfach 569 - Mooswaldallee 1-9, D-7800 Freiburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Aus den DE-PS Nrn. 2633659 und 2824042 ist es bekannt, pflanzliche und/oder tierische Futtermittel in feuchter bzw. nasser Form durch Kaltwalzen in Futterfolien zu überführen.

Voraussetzung für die Herstellung von Futterfolien optimaler Konsistenz, Haltbarkeit und Verteilung der Bestandteile bei Verwendung eines Mischfutterausgangsmaterials ist die Bereitstellung eines sehr gleichmässigen, möglichst feinkörnigen Feuchtgranulats der Futtermittel- bzw. Mischfutterbestandteile. Die Bereitstellung eines solchen Ausgangsmaterials ist, je nach seiner Zusammensetzung, bisher noch nicht möglich oder mit einem grösseren Arbeitsaufwand verbunden.

Ein weiteres Problem bei der Herstellung von Futterfolien nach dem Kaltwalzverfahren besteht darin, dass die noch feuchten Folien aus Feuchtgranulat zum Haftenbleiben an den bei der Herstellung der Futterfolien verwendeten Walzen neigen. Dieses Haftenbleiben oder Ankleben führt dazu, dass bei der Trennung der Futterfolie von der Walze die Folie entweder als Ganzes reisst oder aus der Folie einzelne Futtermittelbestandteile herausgerissen werden. Eine solche beschädigte Futterfolie ist dann nicht handelsfähig. Zur Verhinderung des Anklebens des folienförmig ausgeformten Feuchtgranulats an den Walzen bietet sich die Verwendung von Trennmitteln an. So wird beispielsweise bereits im Rahmen des Futterfolienherstellungsverfahrens gemäss der deutschen Patentanmeldung P Nr. 3212406 bei der Ausbildung der einen Lage der mehrschichtigen bzw. mehrlagigen Futterfolie als Trennmittel ein zum selben Zweck auch in der Back- und Süsswarenindustrie eingesetztes Glyzeridgemisch verwendet.

Sollen nun durch Kaltwalzen hergestellte Futterfolien in Form von Flocken zum Füttern von Aquarienfischen verwendet werden, muss insbesondere der Schwimmfähigkeit der Flocken Beachtung geschenkt werden. Dies deshalb, weil zahlreiche Arten von Aquarienfischen das Futter nur von der Wasseroberfläche aus aufnehmen können.

Der Erfindung lag die Aufgabe zugrunde, hervorragend schwimmfähige einlagige Futterfolien insbesondere für Aquarienfische nach dem Kaltwalzverfahren herzustellen.

Gegenstand der Erfindung sind somit einlagige Futterfolien, insbesondere für Aquarienfische, mit mindestens einem pflanzlichen oder tierischen Futtermittelbestandteil sowie gegebenenfalls üblichen Zusätzen, welche dadurch gekennzeichnet sind, dass sie, bezogen auf ihr Gesamtgewicht, 0,4 bis 5 Gew.-% Glyzeridgemisch enthalten.

Es war bei Kenntnis des Trenneffekts von Glyzeridgemischen (auch bei bereits erfolgtem Einsatz von Glyzeridgemischen als Trennmittel bei der Herstellung mehrlagiger Futterfolien) nicht zu erwarten, dass man bei Verwendung solcher Glyzeridgemische bei der Herstellung einlagiger Futterfolien gezielt deren Schwimmfähigkeit verbessern kann. Da die mehrlagig ausgebildeten Futterfolien

gemäss der deutschen Patentanmeldung P Nr. 3212406 nicht zum Verfüttern an Fischarten, die ihre Nahrung von der Wasseroberfläche aufnehmen, sondern an Fischarten, die im Wasser schwebende und absinkende Nahrung aufnehmen, vorgesehen sind und in der Tat im Wasser auch ziemlich rasch absinken, kommt es bei diesen Folien gar nicht auf deren Schwimmfähigkeit an.

Gegenüber vergleichbaren einlagigen Futterfolien lässt sich erfindungsgemäss die Schwimmfähigkeit auf der Wasseroberfläche von bisher höchstens 2 min auf 15 min verlängern. Durch die Mitverwendung von Glyzeridgemischen werden darüber hinaus die erfindungsgemässen Futterfolien glatter, weicher, geschmeidiger, elastischer und biegsamer als glyzeridfreie Futterfolien oder mehrlagig ausgebildete und in einer Lage glyzeridhaltige Futterfolien gemäss der deutschen Patentanmeldung P Nr. 3212406.

Als Glyzeridgemische kommen erfindungsgemäss Gemische aus Triglyzeriden unterschiedlicher Schmelzpunkte mit Fettsäureresten unterschiedlicher Kettenlänge im Gemisch mit Mono- und Diglyzeriden in Frage. Selbstverständlich muss es sich bei den verwendeten Glyzeridgemischen um futterrechtlich zugelassene Substanzen handeln.

Bei Mitverwendung solcher Glyzeridgemische erhält man gleichmässige Feuchtgranulate der verschiedensten Teilchengrössen, z. B. von:
a) 0,16 bis 0,32 mm
b) 0,32 bis 0,50 mm
c) 0,50 bis 1,00 mm
d) 1,00 bis 2,00 mm

Je gleichmässiger innerhalb einer bestimmten Grössenordnung ein Feuchtgranulat beschaffen ist, um so gleichmässiger sind dessen Inhaltsstoffe verteilt und um so besser lässt es sich zu einer Futterfolie verarbeiten.

Es ist bevorzugt, dass man von einem Feuchtgranulat einer Feuchtigkeit von 27 ± 3% ausgeht.

Als Futtermittelbestandteile zur Zubereitung des Feuchtgranulats eignen sich sämtliche zum gleichen Zweck bisher auch bereits verwendeten pflanzlichen und tierischen Futtermittelbestandteile.

Als Bindemittel für die Herstellung der Folien eignen sich die üblichen Eiweissbindemittel tierischer Herkunft, Stärken, Polysaccharide, Alginate und Zellulosederivate. Oft ist es auch günstig, spezielle und an sich bekannte Presshilfstoffe zuzusetzen.

Die Herstellung der erfindungsgemässen Futterfolie erfolgt derart, dass man erfindungsgemäss ein Glyzeridgemisch in der erforderlichen Menge enthaltendes Feuchtgranulat in an sich bekannter Weise durch Kaltwalzen zu einer Folie verpresst und diese dann trocknet.

Der Anpressdruck der Aufgabewalzen kann hierbei zwischen 140 und 180 bar, der der Abgabewalzen zwischen 170 und 200 bar liegen. Das Flächengewicht der trockenen Folie beträgt etwa 55 bis 65 g/m².

Das folgende Beispiel soll die Erfindung näher erläutern.

*Beispiel:*

100 kg einer Mischung aus pflanzlichen und tierischen Futtermittelbestandteilen mit futtermittelrechtlich zugelassenen Wirkstoffen und Zusätzen werden mehlfein (Korngrösse 30-100 μm) gemahlen und mit 10 kg eines eiweiss- und polysaccharidhaltigen Bindemittels in flüssiger Form in einem Mischgranulator unter Zugabe eines Gemischs von Mono-, Di- und Triglyzeriden als Trennmittel bis zu 30 min homogen vermischt. Nach dem Granulieren wird die Mischung bis zu 24 h sich selbst überlassen und über ein Walzenpaar mit einem Druck bis zu 200 bar mit einer Geschwindigkeit von 20 bis 110 m/min zu einer Folie von 0,15 mm Dicke verpresst. Die so hergestellte Folie wird in an sich bekannter Weise mittels Warmluft oder gemäss Patentanmeldung P Nr. 3148658 durch Infrarotstrahlung getrocknet. Flocken aus der erhaltenen Futterfolie sind glatt, weich, geschmeidig, elastisch und biegsam und enthalten die Futtermittelbestandteile gleichmässig verteilt. Sie schwimmen beim Aufbringen auf Wasser ca. 15 min lang auf der Wasseroberfläche und beginnen erst dann abzusinken.

## Patentansprüche

1. Einlagige Futterfolie, insbesondere für Aquariumfische, mit mindestens einem pflanzlichen oder tierischen Futtermittel sowie gegebenenfalls üblichen Zusätzen, dadurch gekennzeichnet, dass sie bezogen auf ihr Gesamtgwicht 0,4 bis 5 Gew.-% Glyzeridgemisch enthält.

2. Verfahren zur Herstellung einer Futterfolie nach Anspruch 1, dadurch gekennzeichnet, dass man ein mindestens einen Futtermittelbestandteil, gegebenenfalls übliche Zusätze und, bezogen auf das Trockengewicht der fertigen Futtermittelfolie, 0,4 bis 5 Gew.-% eines Glyzeridgemisches enthaltendes Feuchtgranulat in an sich bekannter Weise durch Kaltwalzen zu einer Futterfolie ausformt und die erhaltene Futterfolie trocknet.

3. Verfahren nach Anspruch 2, dadurch gekennzeichnet, das man von einem Feuchtgranulat einer Feuchtigkeit von 27 ± 84 3% ausgeht.

## Claims

1. One-layer feed foil, especially for aquarium fish, with at least one plant or animal feed-stuff as well as possible usual additives, wherein 0.4 to 5 weight % glyceride mixture, related to its total weight, are contained.

2. Process for the production of a feed foil according to Claim 1, wherein a moist granulate, containing at least one feed-stuff component, possibly usual additives and 0.4 to 5 weight % of a glyceride mixture related to the dry weight of the finished feed foil, is shaped into a feed foil in known manner by cold rolling and the feed foil obtained is dried.

3. Process according to Claim 2, wherein a moist granulate with a moisture of 27 ± 3% is assumed.

## Revendications

1. Feuille monocouche d'aliment pour animaux, en particulier pour les poissons d'aquarium, contenant au moins un aliment d'origine végétale ou animale et, le cas échéant, des additifs usuels, caractérisée en ce qu'elle comporte, rapporté à son poids total, entre 0,4 et 5% en poids d'un mélange de glycérides compris.

2. Procédé de préparation d'une feuille d'aliment pour animaux selon la revendication 1, caractérisé en ce que l'on forme, par laminage à froid et de façon connue en soi, une feuille d'aliments pour animaux à partir de granulat humide contenant au moins un constituant d'aliment pour animaux, le cas échéant des additifs usuels et, rapporté au poids sec de la feuille d'aliments pour animaux finie, de 0,4 à 5% en poids d'un mélange de glycérides, et que l'on sèche la feuille d'aliments pour animaux obtenue.

3. Procédé selon la revendication 2, caractérisé en ce que l'on part d'un granulat humide présentant une humidité de 27 ± 3%.